# EUROPEAN PATENT APPLICATION

(11) **EP 4 722 611 A1**
(43) Date of publication of application: **08.04.2026**
(21) Application number: 25205872.2
(22) Date of filing: 30.09.2025
(51) Int. Cl.: F24F 11/755, F24F 11/77, F24F 12/00, F24F 3/147

(54) **HEAT RECOVERY UNIT AND METHOD OF OPERATING THE SAME**

(30) Priority: 04.10.2024 CH 10982024
(71) Applicant: Zehnder Group International AG, 5722 Gränichen (CH)
(72) Inventor: Klug, Peter, 77933 Lahr (DE)
(74) Representative: Rentsch Partner AG

(57) **Abstract**

The present disclosure relates to a heat recovery unit (100) comprising a heat exchanger (1) for heat exchange between at least two fluids. The heat exchanger (1) comprises a stack (2) of alternatingly arranged heat exchange elements of a first type (21) and heat exchange elements of a second type (22), wherein the heat exchange elements of the first type (21) and the heat exchange elements of the second type (22) define alternatingly arranged first flow paths (23) and second flow paths (24) between each other, wherein each first flow path (23) extends from a first inlet (231) to a first outlet (232) and each second flow path (24) extends from a second inlet (241) to a second outlet (242). The heat recovery unit () further comprises a first fan (3) being configured to actively move a first fluid (F1) through the first flow paths (23) of the heat exchanger (1) and a second fan (4) being configured to actively move a second fluid (F2) through the second flow paths (24) of the heat exchanger (1) and a controller (5) configured to control the first (3) and second (4) fan, said controller (5) is configured to activate a bypass mode in which the controller (5) activates the first fan (3) and the second fan (4) in an alternating operation, such that only one of the two fluids (F1, F2) is actively moved through the heat exchanger (1) at a time. The present disclosure further relates to a method of operating the heat exchanger (1)

## Description

### FIELD OF THE DISCLOSURE

The present disclosure relates to a heat recovery unit comprising a bypass mode, as well as a method for operating such a heat recovery unit.

### BACKGROUND OF THE DISCLOSURE

Heat recovery units comprising heat exchangers are known. Heat recovery units typically comprise at least one fan and a heat exchanger usually assembled and enclosed inside a thermal and noise insulated structure. Tube bundle heat exchangers and plate heat exchangers are most widespread. Conventional heat exchangers are typically formed by multiple metal plates, which define flow paths between each other to transfer heat between at least two fluids or by a bundle of tubes, to facilitate the transfer of heat and greatly increases the speed of the temperature change between at least two fluids.

### SUMMARY OF THE DISCLOSURE

Heat recovery units allow the air renewal of buildings and maintaining and recovering energy used for air conditioning. The main objective of a heat exchanger or heat recovery system is the recovery of energy by transferring the heat of the air that is extracted from the inside of a building to the air that is supplied from the outside. A heat recovery unit typically comprises at least one fan and a heat exchanger, which are assembled and housed inside a thermal and noise insulated structure. The extraction air from inside the building typically passes the heat exchanger without mixing with fresh air from the outside of the building. By exchanging the air by means of the heat exchanger, it is possible to recover a high percentage of the energy used for the building's acclimatization that otherwise would be wasted.

Besides conventional heat exchangers which are formed by multiple metal plates or tubes which define flow paths between each other to transfer heat between at least two fluids, so called enthalpy exchangers exist as well. Enthalpy exchangers can recover both the thermal and the latent energy, e.g. from the stale air extracted from wet rooms around a home. The additional energy, which would otherwise be lost, is typically transferred to a counter-flowing fluid, e.g. an incoming fresh air stream, before being supplied to habitable rooms. Enthalpy exchangers are typically used in so called Energy Recovery Ventilation (ERV) systems, as opposed to sole Heat Recovery Ventilation (HRV) system. Enthalpy exchangers typically comprise heat exchange elements, which are made of or are fitted with a membrane material, which enables the crossover of moisture, as well as thermal energy. As the humidity is transferred as water vapor, by diffusion, enthalpy heat exchangers are perfectly suited to counteract both, hot and humid indoor climates during the summer months, as well as drier indoor environments during the winter months.

Under certain weather conditions and seasons of the year, typically in summer during cooler summer nights, it can be desirable to bypass the heat exchanger on one side so that the cool outdoor air from outside the building is not heated up before it is channeled indoor into a room as supply air. Such a bypass can be achieved in various ways. The most common methods include bypass ducts which are opened and at the same time one side of the heat exchanger is closed. The heat transfer from the extracted air to the supplied air is thereby interrupted. The disadvantage of this solution is its mechanical complexity. A bypass duct must be provided, which requires more installation space.

In addition, the design of the heat recovery unit becomes more complex and more susceptible to malfunctions or failures due to the actuators needed, typically servo motors, for operating flaps for opening or closing these ducts. In addition, the heat recovery unit becomes more expensive. An alternative to bypass ducts is to simply supply cooler outdoor air via an open window and release the exhaust air through the heat recovery unit via the heat exchanger. In this case, the heat recovery unit is only operated in an extract air mode (only the extract air fan is running). The supply air is drawn into the room via an open window. The disadvantage of this solution is that the supply air is not filtered and therefore dirt, pollen, insects, etc. can enter the room. In addition, the entry of noise through the open window can be considerable.

One objective of the present disclosure can therefore be seen in improving the known heat recovery units, in particular providing a heat recovery unit with a mechanically simpler and/or more reliable design which still provides a bypass functionality.

The present disclosure relates to a heat recovery unit comprising a heat exchanger for heat exchange between at least two fluids, preferably in form of two air streams. The heat exchanger within the heat recovery unit may comprise a stack of alternatingly arranged heat exchange elements of a first type and heat exchange elements of a second type. The heat exchange elements of the first type and the heat exchange elements of the second type may define alternatingly arranged first flow paths and second flow paths between each other. Each first flow path may extend from a first inlet to a first outlet and each second flow path may extend from a second inlet to a second outlet.

The heat recovery unit may in some embodiments further comprise a first fan, which may be configured to actively move a first fluid through the first flow paths of the heat exchanger and a second fan, which may be configured to actively move a second fluid through the second flow paths of the heat exchanger. The fans can each be in form of a sub-assembly comprising a housing with therein arranged first or second fan wheels. The first and second fans may in some embodiments each comprise an engine and the thereto connected fan wheel, which is arranged within the respective housing. The housing may extend from an inlet to an outlet, whereby the housing is preferably designed in an aerodynamically optimized manner.

The heat recovery unit may in some embodiments further comprise a controller configured to control the first and second fan. The controller may in some embodiments comprise an electric circuit or processor and a memory. The controller may in some embodiments be configured to activate a bypass mode. During this bypass mode the controller activates the first fan and the second fan in an alternating operation, such that only one of the two fluids is actively moved through the heat exchanger at a time.

The present disclosure may further comprise a method for operating a heat recovery unit according to the present disclosure. The method may comprise providing a heat recovery unit according any of the embodiments described herein. The method may in some embodiments further comprise activating the first fan to actively move a first fluid through the first flow paths. The method may in some embodiments further comprise activating the second fan to actively move a second fluid through the second flow paths. In some embodiments, the first and second fans may be activated by the controller in an alternating operation, such that only one of the two fluids is actively moved through the heat exchanger at a time.

The objective of the bypass mode is typically to temporarily operate the heat recovery unit in a way, so that the heat exchanger only exchanges air but the active exchange of heat between incoming and outgoing air is prevented. A typical use case can be to allow cold air during nights to pass the heat recovery unit and thereby the therein arranged heat exchanger, to exchange warmer indoor air from inside a building by cooler outdoor air from outside the building, without active heat exchange between the two airstreams, to prevent the cooler outdoor air from being warmed up by the warmer indoor air being moved from inside the room to the environment. By operating the first and second fan of the heat exchanger by means of the controller by activating the first fan and the second fan in an alternating operation, only warm indoor air from inside or cold outdoor air from outside is actively moved through the heat exchanger at a time. In the context of the present disclosure, actively moving is to be understood as actively controlling the respective airflow by the first and/or second fan. Besides the active movement of fluid, which is established by either pushing or pulling air through the first or second flow paths by the first or second fan, air exchange may also happen due to circulation. This is to be understood as passive movement as it happens naturally without operating the fans and therefore happens uncontrolled.

Good results can be achieved, when the controller is in the bypass mode configured to activate the first fan for a first time interval. The time interval may be larger as 0 s, such as for example of 5s to 600s, preferably of 60s to 180s, and after stopping the first fan the controller is configured to activate the second fan for a second time interval, preferably of 5s to 600s, more preferably of 60s to 180s. With the given dimensions of standard heat exchangers, in particular for residential applications, these time intervals allow for an exchange of a substantial volume of fluid without creating a pressure level within the room which is perceived as unpleasant for the residents.

The first fan is typically configured to move outdoor air through the heat exchanger and the second fan is configured to move inside air through the heat exchanger, or vice versa. The controller may be configured to activate the first and second fan in the bypass mode in a manner such that the first time interval is longer than the second time interval. This can be used to create a moderately elevated pressure level on the inside within the building compared to the outside and thereby prevent that air exchange between the inside and the outside of the building takes place outside the heat recovery unit in an unwanted manner. The heat recovery unit preferably comprises air filters, ensuring that the outside air moved to the inside is filtered.

The controller may be configured to receive an indoor signal indicative of an indoor air parameter, in particular the indoor temperature and/or indoor humidity. The indoor signal is preferably generated by at least one indoor sensor, which is configured to measure the indoor air parameter. An indoor sensor may measure the indoor temperature and/or the indoor humidity. Alternatively, there may be two indoor sensors which each measure either the indoor temperature or the indoor humidity. The at least one indoor sensor may be part of the heat recovery unit or a kit of parts, comprising the heat recovery unit and/or at least one indoor sensor. Alternatively, in particular for residential applications, the at least one indoor sensor may be part of a smart home system. The at least one indoor sensor can be interconnected to the controller of the heat recovery unit via wireless applications, including but not being limited to WIFI or Bluetooth. The at least one indoor sensor can be an integral sensor which is configured to measure the indoor temperature and the indoor humidity. Alternatively, two separate sensors can be communicatively connected to each other or to the controller.

The controller can be configured to compare the indoor signal indicative of an indoor temperature with a predefined indoor temperature target value. The indoor temperature target value may be predefined and stored on a memory in the controller. Alternatively, the indoor temperature target value can be altered and e.g. inputted by a user, either directly at the heat recovery unit or remotely or be provided remotely. The controller is preferably configured to activate the bypass mode, if the indoor signal indicates that the indoor temperature fulfills the indoor temperature target value. Depending on the settings of the controller, "fulfills" can be either understood as meeting a specific value, being within a certain range or exceeding respectively falling below a certain threshold. Alternatively or in addition, the controller can be configured to compare the indoor signal with a predefined indoor humidity target value and may be configured to activate the bypass mode, if the indoor signal indicates that the indoor humidity fulfills the indoor humidity target value.

For inputting a predefined indoor temperature or humidity target value, the heat recovery unit may comprise a user interface which is configured to send the indoor temperature target value and/or the indoor humidity target value, predefined via the user interface or the controller. Alternatively or in addition, the controller can be configured to receive the indoor temperature target value and/or the indoor humidity target value from a remote control unit.

Good results can be achieved if the controller is configured to receive an outdoor signal indicative of an outdoor air parameter, preferably from at least one outdoor sensor, which is configured to measure the outdoor temperature and/or outdoor humidity. Analogous to the at least one indoor sensor, also the at least one outdoor sensor may be part of the heat recovery unit or a kit of parts, comprising the heat recovery unit and/or at least one outdoor sensor. Alternatively, in particular for residential applications, the at least one outdoor sensor may be part of a smart home system. The at least one outdoor sensor can be interconnected to the controller of the heat recovery unit via wireless applications, including but not being limited to WIFI or Bluetooth. The controller may be configured to compare the indoor signal and the outdoor signal and based on the result of the comparison the controller may be configured to activate the bypass mode.

The controller may be configured to activate the bypass mode if the comparison of the indoor signal and the outdoor signal indicates that the indoor temperature exceeds the outdoor temperature. To prevent that the bypass mode is activated e.g. in winter, when the outdoor temperature typically falls below the indoor temperature, the controller may be configured to receive or calculate a median outdoor signal indicative of a median outdoor temperature, preferably from the outdoor sensor. In this mode, the outdoor signal may be a median outdoor signal indicative of a median outdoor temperature. The median or alternatively average outdoor temperature may be determined by measuring the actual outdoor temperature over a predefined time interval. The median or alternatively average outdoor temperature may be either calculated in the at least one outdoor temperature sensor or the controller. The median outdoor temperature is typically calculated over a time interval being in the range of 1 minute up to 1 day. Good results have been achieved with the time interval being in the range of 0.5 hours up to 4 hours. To prevent that the bypass mode is activated e.g. in winter, the median outdoor signal is typically compared to an outdoor temperature target value and only if the median outdoor signal meets or exceeds the outdoor temperature target value, the bypass mode is activated.

Besides making sure that the outdoor temperature is below the indoor temperature, to ensure that the desired cooling effect takes place, it can be also desired to ensure that the outdoor humidity is measured. Therefore, the controller may be configured to activate the bypass mode if the comparison of the indoor signal and the outdoor signal further indicates that the outdoor humidity does not exceed the indoor humidity and/or the predefined indoor humidity target value. This can be especially important in hot and humid climates, where it is not desirable for the bypass to be controlled based on temperature alone. The humidity also plays a big role in humid locations, where the bypass may otherwise be activated at undesirable times and raise the indoor humidity in an undesirable manner.

The outdoor signal may be a median outdoor signal indicative of a median outdoor humidity. The median or alternatively average outdoor humidity may be determined by measuring the actual outdoor humidity over a predefined time interval. The median or alternatively average outdoor humidity may be either calculated in the at least one outdoor sensor or the controller. The median outdoor humidity is typically calculated over a time interval being in the range of 1 minute up to 1 day. Good results can be achieved with the time interval being in the range of 0.5 hours up to 4 hours. The controller may be configured to compare the median outdoor signal with a predefined outdoor temperature target value and/or with a predefined outdoor humidity target value and is configured to activate the bypass mode, if the median outdoor signal indicates that the outdoor temperature and/or outdoor humidity fulfills the target values.

Fulfilling is in a typical use case for activating the bypass mode to be understood as, the outdoor temperature is lower than the indoor temperature, but higher than a lower threshold of the indoor temperature target value. This ensures that the bypass mode has a positive effect on cooling the indoor air. By ensuring that the outdoor temperature at the same time exceeds the lower threshold of the indoor temperature target value, it is ensured that the bypass is not activated e.g. in winter. By in addition ensuring that the bypass mode is only activated when the indoor humidity exceeds the outdoor humidity and/or the outdoor humidity does not exceed an indoor humidity target value, it can be assured that the indoor humidity is not elevated in an unwanted manner.

The heat recovery unit according to the present disclosure may comprise a heat exchanger for heat exchange between at least two fluids. The heat exchanger may be in form of a plate heat exchanger or a tube bundle heat exchanger. Good results can be achieved when the heat exchanger is a plate heat exchanger and comprises a stack of alternatingly arranged heat exchange elements of a first type in form of plates and heat exchange elements of a second type in form of plates. The plate heat exchange elements of the first type and the plate heat exchange elements of the second type typically differ from each other in that they comprise deviating corrugations. The heat exchange elements of the first type and the heat exchange elements of the second type may both be made from an essentially planar base element with fluid guiding ribs, as will be described in more detail below noted.

The heat exchange elements can be delimited by a circumferential outer edge and differ from each other in the shape of the ribs and corrugations. The heat exchange elements of the first type and the heat exchange elements of the second type may define alternatingly arranged first flow paths and second flow paths between each other, wherein each first flow path extends from a first inlet to a first outlet and each second flow path extends from a second inlet to a second outlet. The flow paths may be formed by alternatingly superimposing heat exchange elements of the first type and of the second type. The first inlet may be arranged adjacent to the second outlet and the second inlet adjacent to the first outlet.

The heat exchange elements of the first type and the heat exchange elements of the second type may extend along a longitudinal axis and are typically alternatingly arranged with respect to each other parallel to the longitudinal axis. The alternatingly arranged first flow paths and second flow paths may be created by beadings and/or recesses, e.g. corrugations, which are stamped into the heat exchange elements of the first type and the heat exchange elements of the second type. In the assembled state, the beadings and/or recesses of the first flow paths and the second flow paths may be laterally displaced with respect to each other or shaped to opposite sides of the plate elements of the first and second type, to form the first flow paths and the second flow paths between each other.

The heat exchange elements of the first and second type can be formed from a flat panel with the fluid-guiding ribs and the longitudinal ribs being formed by shaping the heat exchange elements accordingly. The heat exchange elements are usually delimited by a circumferential outer edge. To form and delimit the fluid paths, the stack is formed by superimposing heat exchange elements of the first and second type. The heat exchange elements can be superimposed by arranging the outer edges of the heat exchange elements of the first and second type onto one another. The heat exchange elements of the first and/or the second type can be in the simplest form rectangular or rhomb shaped or a combination thereof, forming a crossflow heat exchanger. In a variation, the heat exchange elements comprise a rectangular intermediate zone and thereto adjacent first and second inlet/outlet sections (first and second cross-flow zones) forming a counter/parallel-flow heat exchanger with a hexagonal footprint. The heat exchange elements of the first and/or the second type may be circumferentially delimited by an outer edge, which can be at least partially designed as a folding or a bulge.

The heat exchange elements of the first and second type may each extend along a longitudinal axis and can include a first cross-flow zone, a second cross-flow zone and an intermediate zone located along the longitudinal axis between the first and second cross-flow zones. When looking in the direction of the longitudinal axis, the first of the two fluids is fed into the heat exchanger through the first inlet into the first cross-flow zone and flows along the longitudinal direction through the first cross-flow zone into the intermediate zone and subsequently the second cross-flow zone, before exiting the heat exchanger through the first outlet. The second of the two fluids is fed into the heat exchanger through the second inlet, being with regard to the longitudinal direction either located adjacent (parallel flow heat exchanger) or opposite to the first inlet (counter-flow heat exchanger). The second fluid also flows along the longitudinal direction through the first cross-flow zone, the intermediate zone and the second cross-flow zone, before it exits the heat exchanger through the second outlet.

The first flow paths and the second flow paths can be designed, such that the two fluids flow in the region of the intermediate zone in opposite directions but essentially parallel with respect to the longitudinal axis and with respect to each other. In case of a counter-flow heat exchanger, the first cross-flow zones of the first flow paths can be arranged adjacent to the second cross-flow zones of the second flow paths and vice versa. This results in a fluid guidance within the heat exchanger such that after the entry of the one fluid into the heat exchanger, it first flows through the first cross-flow zone, i.e. heat is exchanged with the other fluid such that both fluid flows intersect.

The counter-flow zone is subsequently passed, in which the two fluids flow diametrically to one another. This is followed by the intermediate zone where the two fluids flow parallel to each other, before entering the second cross-flow zone, in which the two fluid flows intersect again. From their first and second inlets to their respective first and second outlets the two flows resemble a cross with respect to each other. However, the fluid flows are always separated from one another by the first and second plate elements, which are arranged in the stack in an alternating manner. To delimit the flow paths, except for the first and second inlets and first and second outlets, the outer edges of the plate elements of the first type and the plate elements of the second type may be aligned with each other in that they are in physical contact with other.

Good results regarding the heat exchange are achieved when the intermediate zone, either as counter-flow zone or identical-flow zone, is longer than each of the cross-flow zones. In particular, the counter-flow zone or the identical-flow zone can be three times, preferably four times, particularly more than four times longer than the length of a cross-flow zone (each as seen looking in the direction of the longitudinal axis). Instead of the counter-low zone, there can also be the aforementioned identical-flow zone, i.e. in this zone, the two fluid flows flow in identical directions. This requires that both fluid flows are fed to the same front side of the heat exchanger and are removed from the same front side of the heat exchanger.

To be able to guide the first and second fluid accordingly, at least one fluid-guiding rib can be arranged between the plate elements of the first and second type in the first cross-flow zone and/or the second cross-flow zone and preferably at least one longitudinal rib is arranged in the intermediate zone extending along the longitudinal axis. The fluid-guiding rib may be arranged inclined with respect to the longitudinal axis. The fluid-guiding rib of the plate element of the first type and the fluid-guiding rib of the plate element of the second type can be arranged opposing, forming a cross with each other. The first and second inlets and/or outlets are arranged inclined with respect to the longitudinal axis and the at least one fluid-guiding rib in the first cross-flow zone and/or the second cross-flow zone is arranged inclined with respect to the longitudinal axis, preferably perpendicular to the first and second inlets and/or outlets.

The plate heat exchanger may be an enthalpy heat exchanger. The heat exchange elements of the first and second type may each comprise a heat exchange plate which is perforated or with an inherent pore structure, which is preferably on at least one side coated by a polymer layer with water vapor transmission characteristics. The heat exchange of the first and second type each can comprise heat exchange plates, which are perforated or with an inherent pore structure, which is preferably on at least one side coated by a thin polymer layer with water vapor transmission characteristics. The coating of the heat exchange plates may comprise a polymer, preferably a thermoplastic polymer. The heat exchange plates can be produced by thermal processing in form of a thermal forming step. The thermoplastic polymer can be polystyrene (PS), polyvinyl chloride (PVC), viscose or polyester, such as polyethylene terephthalate (PET), or co-polyester are selected as thermoplastic polymer for the coating. The polymer may not include any plasticizer. The polymer may in addition comprise a biocide (bactericide and/or fungicide).

In an embodiment, the heat exchange plate is a fabric, preferably a nonwoven fabric. The fabric may include thermoplastic fibers only or a combination of thermoplastic fibers and thermoset fibers or a combination of thermoplastic fibers and a resin or a combination of thermoplastic fibers and inorganic fibers. The fabric may include multicomponent or bi-component fibers together with standard thermoset and/or thermoplastic fibers. The fabric can include more than 50 wt.% multicomponent or bi-component fibers and may include multicomponent or bi-component fibers only. In addition, the fabric may include metal fibers and/or wick fibers providing high thermal conductivity together with mechanical strength and high capillary action ("humidity conductivity"), respectively. The inorganic fibers may be glass fibers, silicon carbide fibers or any mineral fiber.

In case of an enthalpy heat exchanger, the connection element may have additional advantages. Not only may the inflow and pressure drop behavior be influenced positively, but the connection element, especially in form of a grid, may also reduce the flammability of the heat exchanger elements. This can be achieved by selecting a suitable flame resistant material for the connection element. The connection element can also be made of an intumescent material, which "swells" or foams in case of fire. Such a material increase in volume and decrease in density when exposed to heat. After swelling, the material may close the first and second inlet and/or first and second outlet openings and thereby act as a flame and heat barrier.

It is to be understood that both the features described in the context of the plate heat exchanger and the features described in the context of the method for providing a plate heat exchanger can be used interchangeable.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described disclosure will be more fully understood from the detailed description given herein below and the accompanying drawings which should not be considered limiting to the disclosure described in the appended claims. The drawings are showing:
- Fig. 1: a lateral sectional view on a first variation of a heat recovery unit;
- Fig. 2: a schematic block diagram of the heat recovery unit according to Fig-ure 1;
- Fig. 3: a perspective view on a matching pair of a heat exchange elements of the first type and heat exchange elements of the second type of a heat exchanger for the heat recovery unit according to Figure 1;
- Fig. 4: a perspective view on a stack of heat exchange elements according to Figure 3.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

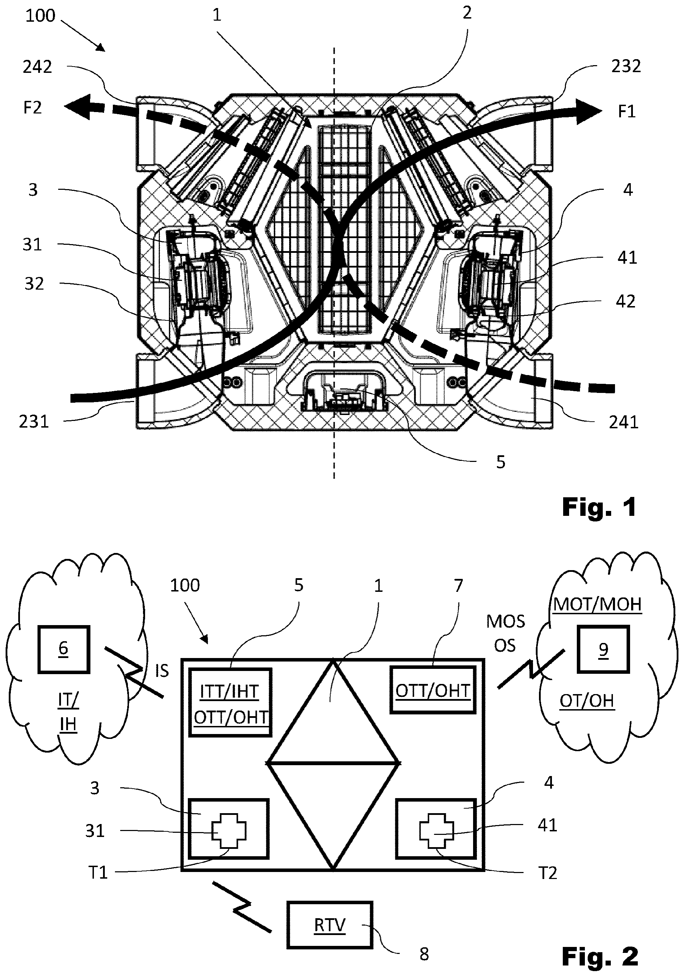

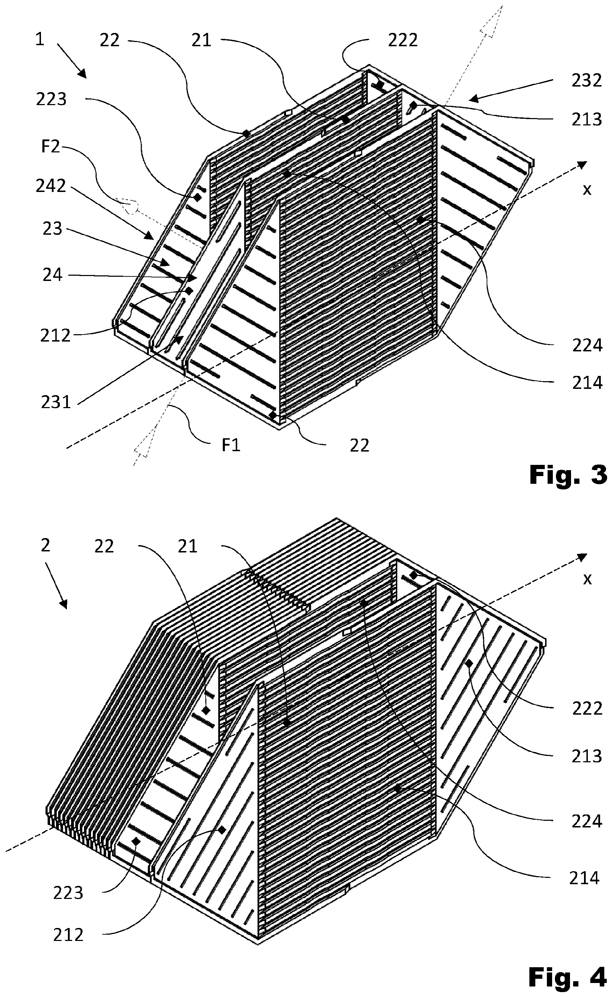

**Figure** 1 shows a lateral sectional view of a first variation of the heat recovery unit 100 with a therein arranged heat exchanger 1. The shown heat recovery unit 100 comprises a heat exchanger 1 with a stack 2 of alternatingly arranged heat exchange elements of a first type and heat exchange elements of a second type. The heat exchange elements of the first type and the heat exchange elements of the second type define alternatingly arranged first flow paths and second flow paths between each other. Each first flow path extends from a first inlet 231 to a first outlet 232 and each second flow path extends from a second inlet 241 to a second outlet 242 as will be described further down in more detail with respect to **Figures 3** and **4****.**

The shown variation of the heat recovery unit 100 further comprises a first fan 3, comprising a first fan wheel 31, which is configured to actively move a first fluid F1 through the first flow paths of the heat exchanger 1 and a second fan 4 comprising a second fan wheel 41, which is configured to actively move a second fluid F2 through the second flow paths of the heat exchanger 1. The fans 3, 4 each comprise a fan wheel 31, 41 which is configured to actively move the first or second fluid through the first or second flow paths. The shown fans 3, 4 are each in form of a sub-assembly comprising a housing 32, 42 with therein arranged first or second fan wheel 31, 41. The first and second fans 3, 4 typically comprise an engine and the thereto connected fan wheel 31, 41, which is arranged within the housing 32, 42. The controller 5 will be described further down in more detail with respect to **Figure 2****.**

The shown heat recovery unit 100 can be operated in a bypass mode whereby the first fan 3 is activated to actively move the first fluid F1 through the first flow paths of the heat exchanger 1. After stopping the first fan 3, the second fan 4 is activated to actively move the second fluid F2 through the second flow paths of the heat exchanger 1. The first 3 and second 4 fans are activated by the controller 5 in an alternating operation, such that only one of the two fluids F1, F2 is actively moved through the heat exchanger 1 at a time. This allows that inside air is exchanged by outside air without heat energy being exchanged between the inside air and the outside air.

**Figure 2** shows a schematic block diagram of the heat recovery unit 100 according to **Figure 1****.** The shown controller 5 comprises an electric circuit or a processor. The controller 5 is configured to activate a bypass mode, whereby the controller 5 is configured to activate the first fan wheel 31 and the second fan wheel 41 in an alternating operation, such that only one of the two fluids is actively moved through the heat exchanger 1 of the heat recovery unit 100 at a time. The controller 5 is configured to receive an indoor signal IS indicative of an indoor temperature IT and/or an indoor humidity IH, preferably from an indoor sensor 6, which is configured to measure the indoor temperature IT and/or the indoor humidity IH. The shown controller 5 is further configured to compare the indoor signal IS with a predefined indoor temperature target value ITT and/or an indoor humidity target value IHT and is configured to activate the bypass mode, if the indoor signal IS indicates that the indoor temperature IT fulfills the indoor temperature target value ITT and/or that the indoor signal IS indicates that the indoor humidity IH fulfills the indoor humidity target value IHT.

The shown heat recovery unit 100 comprises a user interface 7 which is configured to send the indoor temperature target value ITT and/or the indoor humidity target value IHT predefined via the user interface 7. The shown controller can alternatively be configured to receive the indoor temperature target value ITT and/or indoor humidity target value IHT from the remote control unit 8. The controller 5 is configured to receive an outdoor signal OS indicative of an outdoor temperature OT and/or an outdoor humidity OH from the outdoor sensor 9 which is configured to measure the outdoor temperature OT and/or the outdoor humidity OH.

The controller 5 is further configured to compare the indoor signal IS and the outdoor signal OS and based on the results of the comparison is configured to activate the bypass mode. The controller 5 is configured to activate the bypass mode if the comparison of the indoor signal IS and the outdoor signal OS indicates that the indoor temperature IT exceeds the outdoor temperature OT and/or that the indoor humidity IH exceeds the outdoor humidity OH.

In addition, the controller 5 is configured to also receive a median outdoor signal MOS indicative of a median outdoor temperature MOT and/or a median outdoor humidity MOH from the outdoor sensor 9. The controller 5 is configured to compare the median outdoor signal MOS with a predefined outdoor temperature target value OTT and/or an outdoor humidity target value OHT, stored in the controller and is configured to activate the bypass mode, if the median outdoor signal MOS indicates that the median outdoor temperature MOT fulfills the outdoor temperature target value OTT and/or if the median outdoor signal MOS indicates that the median outdoor humidity MOH fulfills the outdoor humidity target value OHT.

**Figure 3** shows a perspective view on a first variation of a matching pair of heat exchange elements of the first type 21 and a heat exchange elements of the second type 22 for a plate heat exchanger 1 for a heat recovery unit. The shown heat exchange elements of the first 21 and/or the second type 22 are each in form of a plate and each comprise a rectangular intermediate zone 214, 224 and thereto adjacent inlet/outlet sections (first 212, 222 and second 213, 223 cross-flow zones) which are triangular. The heat exchange elements of the first 21 and the second type 22 are circumferentially delimited by an outer edge, which is designed as a folding or a bulge. The heat exchange elements of the first 21 and second 22 type extend along a longitudinal axis x and include a first cross-flow zone 212, 222 a second cross-flow zone 213, 223 and an intermediate zone 214, 224 located along the longitudinal axis x between the first 212, 222 and second 213, 223 cross-flow zones.

When looking in the direction of the longitudinal axis x, the first F1 of the two fluids is fed into the heat exchanger 1 through the first inlet 231 into the first cross-flow zone 212 and flows along the longitudinal direction through the first cross-flow zone 212 into the intermediate zone 214 and subsequently the second cross-flow zone 213, before exiting the heat exchanger 1 through the first outlet 232. The second F2 of the two fluids is fed into the heat exchanger 1 through the second inlet, being in the shown variation with regard to the longitudinal direction located opposite to the first inlet 231. The second fluid F2 also flows along the longitudinal direction through the first cross-flow zone 222, the intermediate zone 224 and the second cross-flow zone 223, before it exits the heat exchanger 1 through the second outlet 242.

**Figure 4** shows a perspective view on a first variation of a stack 2 of alternatingly arranged heat exchange elements 21, 22 as shown by **Figure 3****.** The heat exchange elements of the first 21 and second type 22 are either bonded to each other by welding, brazing or soldering or via a connection element. The shown heat exchange elements 21, 22 comprise fluid-guiding ribs in the first cross-flow zone 212, 222 and in the second cross-flow zone 213, 223 which are arranged inclined with respect to the longitudinal axis x, preferably perpendicular to the first and second inlets and/or first and second outlets, while the longitudinal ribs in the intermediate zone 214, 224 are arranged parallel with respect to the longitudinal axis x.

### LIST OF DESIGNATIONS

- 100: Heat recovery unit
- 1: Heat exchanger
- 2: Stack
- 21: Heat exchange elements first type
- 211: Heat exchange plate
- 212: First cross-flow zone
- 213: Second cross-flow zone
- 214: Intermediate zone
- 22: Heat exchange elements second type
- 221: Heat exchange plate
- 222: First cross-flow zone
- 223: Second cross-flow zone
- 224: Intermediate zone
- 23: First flow paths
- 231: First inlet
- 232: First outlet
- 24: Second flow paths
- 241: Second inlet
- 242: Second outlet
- 3: First fan
- 31: Fan wheel
- 32: Housing
- 4: Second fan
- 41: Fan wheel
- 42: Housing
- 5: Controller
- 6: Indoor sensor
- 7: User interface
- 8: Remote control unit
- 9: Outdoor sensor
- 10: Polymer layer
- F1: First fluid
- F2: Second fluid
- T1: First time interval
- T2: Second time interval
- IS: Indoor signal
- IT: Indoor temperature
- IH: Indoor humidity
- ITT: Indoor temperature target value
- IHT: Indoor humidity target value
- OS: Outdoor signal
- OT: Outdoor temperature
- OH: Outdoor humidity
- MOS: Median outdoor signal
- MOT: Median outdoor temperature
- MOH: Median outdoor humidity
- OTT: Outdoor temperature target value
- OHT: Outdoor humidity target value

## Claims

1. A heat recovery unit (100) comprising
a. a heat exchanger (1) for heat exchange between at least two fluids, preferably in form of two air streams, the heat exchanger (1) comprises a stack (2) of alternatingly arranged heat exchange elements of a first type (21) and heat exchange elements of a second type (22), wherein the heat exchange elements of the first type (21) and the heat exchange elements of the second type (22) define alternatingly arranged first flow paths (23) and second flow paths (24) between each other, wherein each first flow path (23) extends from a first inlet (231) to a first outlet (232) and each second flow path (24) extends from a second inlet (241) to a second outlet (242); and
b. a first fan (3) being configured to actively move a first fluid (F1) through the first flow paths (23) of the heat exchanger (1) and a second fan (4) being configured to actively move a second fluid (F2) through the second flow paths (24) of the heat exchanger (1);
c. a controller (5) configured to control the first fan (3) and the second fan (4), said controller (5) is configured to activate a bypass mode in which the controller (5) activates the first fan(3) and the second fan (4) in an alternating operation, such that only one of the two fluids (F1, F2) is actively moved through the heat exchanger (1) at a time.

2. The heat recovery unit (100) according to claim 1, **wherein** in the bypass mode, the controller (5) is configured to activate the first fan (3) for a first time interval (T1) of 5s to 600s, preferably of 60s to 180s, and after stopping the first fan (3) the controller (5) is configured to activate the second fan (4) for a second time interval (T2) of 5s to 600s, preferably of 60s to 180s.

3. The heat recovery unit (100) according to any of claims 1 or 2, **wherein** the first fan (3) is configured to move outside air through the heat exchanger (1) and the second fan (4) is configured to move inside air through the heat exchanger (1) or vice versa, whereby the controller (5) is preferably configured to activate the first (3) and second fan (4) in the bypass mode in a manner such that the first time interval (T1) is longer than the second time interval (T2).

4. The heat recovery unit (100) according to any of claims 1 to 3, **wherein** the controller (5) is configured to receive an indoor signal (IS) indicative of an indoor temperature (IT) and/or an indoor humidity (IH), preferably from at least one indoor sensor (6) which is configured to measure the indoor temperature (IT) and/or indoor humidity (IH).

5. The heat recovery unit (100) according to claim 4, **wherein** the controller (5) is configured to compare the indoor signal (IS) with a predefined indoor temperature target value (ITT) and is configured to activate the bypass mode, if the indoor signal (IS) indicates that the indoor temperature (IT) fulfills the indoor temperature target value (ITT).

6. The heat recovery unit (100) according to claim 4 or 5, **wherein** the controller (5) is configured to compare the indoor signal (IS) with a predefined indoor humidity target value (IHT) and is configured to activate the bypass mode, if the indoor signal (IS) indicates that the indoor humidity (IH) fulfills the indoor humidity target value (IHT).

7. The heat recovery unit (100) according to claim 5 or 6, **wherein** the heat exchanger (1) comprises a user interface (7) which is configured to send the indoor temperature target value (ITT) and/or the indoor humidity target value (IHT) predefined via the user interface (7) to the controller (5).

8. The heat recovery unit (100) according to claim 5 or 6, **wherein** the controller (5) is configured to receive the indoor temperature target value (ITT) and/or the indoor humidity target value (IHT) from a remote control unit (8).

9. The heat recovery unit (100) according to any of the preceding claims, **wherein** the controller (5) is configured to receive an outdoor signal (OS) indicative of an outdoor temperature (OT) and/or an outdoor humidity (OH), preferably from at least one outdoor sensor (9) which is configured to measure the outdoor temperature (OT) and/or outdoor humidity (OH).

10. The heat recovery unit (100) according to any of claims 4 to 8 and 9, **wherein** the controller (5) is configured to compare the indoor signal (IS) and the outdoor signal (OS) and based on the results of the comparison is configured to activate the bypass mode.

11. The heat recovery unit (100) according to claim 10, **wherein** the controller (5) is configured to activate the bypass mode if the comparison of the indoor signal (IS) and the outdoor signal (OS) indicates that the indoor temperature (IT) exceeds the outdoor temperature (OT).

12. The heat recovery unit (100) according to claims 11, **wherein** the controller (5) is configured to activate the bypass mode if the comparison of the indoor signal (IS) and the outdoor signal (OS) further indicates that the outdoor humidity (OH) does not exceed the indoor humidity (IH) and/or the predefined indoor humidity target value (IHT).

13. The heat recovery unit (100) according to any of the claims 9 to 12, **wherein** the outdoor signal (OS) is a median outdoor signal (MOS) indicative of a median outdoor temperature (MOT) and/or a median outdoor humidity (MOH).

14. The heat recovery unit (100) according to claims 13, **wherein** the controller (5) is configured to compare the median outdoor signal (MOS) with a predefined outdoor temperature target value (OTT) and/or with a predefined outdoor humidity target value (OHT) and is configured to activate the bypass mode, if the median outdoor signal (MOS) indicates that the outdoor temperature (OT) and/or outdoor humidity (OH) fulfills the target values (OTT, OHT).

15. The heat recovery unit (100) according to any of the preceding claims, **wherein** the heat exchanger (1) is a plate heat exchanger and comprises a stack (2) of alternatingly arranged heat exchange elements of a first type (21) in form of plates and heat exchange elements of a second type (22) in form of plates.

16. The heat recovery unit (100) according to claim 15, **wherein** the plate heat exchanger (1) is an enthalpy heat exchanger.

17. The heat recovery unit (100) according to claim 16, **wherein** the heat exchange elements of the first (21) and second type (22) each comprise a heat exchange plate (211, 221) which is perforated or with an inherent pore structure, which is preferably on at least one side coated by a polymer layer (10) with water vapor transmission characteristics.

18. The heat recovery unit (100) according to any of claims 15 to 17, **wherein** the heat exchange elements of the first (21) and second type (22) each extend along a longitudinal axis (x) and include a first cross-flow zone (212, 222), a second cross-flow zone (213, 223) and an intermediate zone (214, 224) located along the longitudinal axis (x) between the first (212, 222) and second cross-flow zones (213, 223).

19. Method for operating a heat recovery unit (100), comprising at least the following method steps:
a. Providing a heat recovery unit (100) according to any of the preceding claims;
b. Activating the first fan (3) to actively move a first fluid (F1) through the first flow paths (23) of the heat exchanger (1);
c. Activating the second fan (4) to actively move a second fluid (F2) through the second flow paths (24) of the heat exchanger (1);
d. the first fan (3) and second fan (4) are activated by the controller (5) in an alternating operation, such that only one of the two fluids (F1, F2) is actively moved through the heat exchanger (1) at a time.
